# EUROPEAN PATENT APPLICATION

(11) **EP 1 641 231 A1**
(43) Date of publication of application: **29.03.2006**
(21) Application number: 04022526.0
(22) Date of filing: 22.09.2004
(51) Int. Cl.: H04M 7/00, H04M 1/253, H04M 1/725, H04L 12/58

(54) **Wireless network telephone system and method for MSN platform**

(71) Applicant: TOPSEED TECHNOLOGY CORP., Chung Ho City, Taipei Hsien, Taiwan 235 (TW)
(72) Inventor: Chen, Shoei-Lai, Taipei 237 (TW)
(74) Representative: TER MEER - STEINMEISTER & PARTNER GbR

(57) **Abstract**

A method for establishing telephone conversation through MSN platform between a calling end and a receiving end is disclosed. To establish the conversation, a user account is required for each of the calling end and the receiving end. The MSN platform has to be activated and logged on at both the calling end and the receiving end. The calling end is dialed up to establish communication with the receiving end through the MSN platform. Upon reception of the dialing message, an alert signal at the receiving end is generated. When an answering signal is transmitted from the receiving end to the calling end through the MSN platform, the conversation is commenced. Otherwise, a failure signal is displayed at the calling end.

## Description

### BACKGROUND OF THE INVENTION

The present invention relates in general to a combination of a MSN communication platform and a wireless telephone communication, and more particularly, to a wireless communication medium constructed by MSN communication platform. When the MSN communication platform of a computer system is activated, wireless signal transmission technique is used to perform connection between a communication unit and the computer system.

Telephone communication between a calling party and an answering party can be established by either wired or wireless connection. Such communication technique has been widely applied for decades. Typically, the telephone communication is constructed by telephone lines and the communication signal is processed by a telephone exchange device. Compared to the computer network, the cost for telephone communication is still higher currently.

On the other hand, as the network has been more and more popular, MSN communication platform has gradually become the trend in for communication. How, although text message and real-time conversation are available for MSN communication platform, the user has to be in front of the computer system to read the text message and reply the message by typing, or use microphone or earphone and speaker electrically connected to the computer system for conversation. When the computer system is not within the accessible distance to the user, the user cannot use the MSN communication for communicating with another party. The term "MSN" stands for the "Microsoft - Network" and is the abbreviation thereof.

### BRIEF SUMMARY OF THE INVENTION

A method for establishing telephone conversation through MSN platform between a calling end and a receiving end is provided. To establish the conversation, a user account is required for each of the calling end and the receiving end. The MSN platform has to be activated and logged on at both the calling end and the receiving end. The calling end is dialed up to establish communication with the receiving end through the MSN platform. Upon reception of the dialing message, an alert signal at the receiving end. When an answering signal is transmitted from the receiving end to the calling end through the MSN platform, the conversation is commenced. Otherwise, a failure signal is displayed at the calling end.

The present invention also provides a MSN platform wireless network telephone system, comprising a communication unit, a computer system and a network system. The communication unit has a wireless signal transceiving unit, and the computer system is loaded with a MSN communication platform and includes a transceiver controller installed therein to transmit or receive wireless signal to or from the wireless transceiving unit of the communication unit. The computer system is connected to a network system.

In one embodiment, the communication unit includes a wireless phone, a wired telephone or a cell phone. The communication unit further comprises a signal processing unit connected to the wireless signal transceiving unit and a communication unit interface connected to the signal processing unit. The transceiver controller is connected to the computer system via a connection port such as a USB port. Preferably, the transceiver controller comprises a wireless signal transceiving unit and a signal processing unit. The transceiver controller includes a wireless access point.

### BRIEF DESCRIPTION OF THE DRAWINGS

The above objects and advantages of the present invention will be become more apparent by describing in detail exemplary embodiments thereof with reference to the attached drawings in which:
Figure 1 is a block diagram of a wireless network telephone;
Figure 2 is a block diagram showing the wireless network communication system; and
Figure 3 is a flow chart showing a method for executing a network communication.

### DETAILED DESCRIPTION OF THE INVENTION

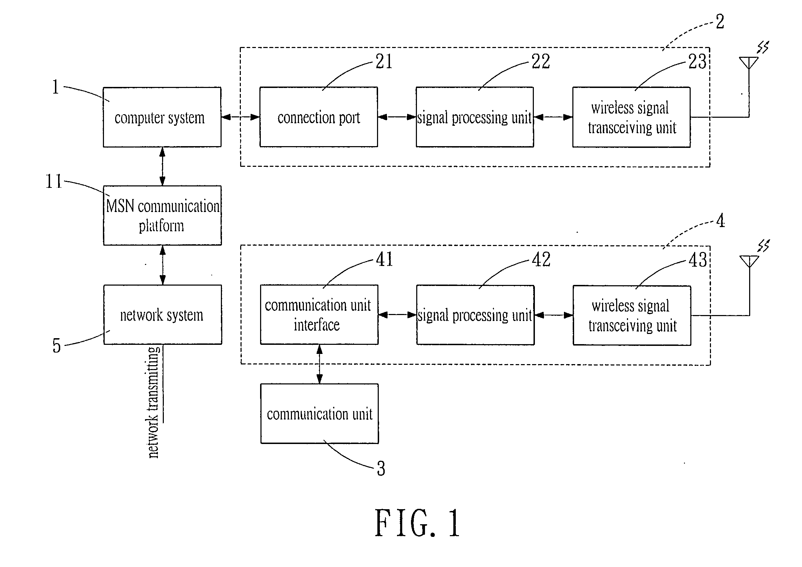

Referring to Figure 1, an embodiment of an MSN wireless network telephone system comprises a computer system, a signal transmission controller 2, a communication unit 3 and a signal transceiver 4. The computer system 1 connects to a network system 5 via a MSN communication platform 11 to perform signal transmission. Wireless communication is used between the signal transceiver controller 2 and the signal transceiver 4.

In this embodiment, the computer system 1 includes a computer device such as a personal computer or a server that has a display and input unit at the calling side or the answering side. The MSN communication platform 11 is a communication platform installed in the computer system 1 to connect the computer system 1 to the network system 5, so as to perform real-time message transmission between a calling party and a receiving party.

The signal transmission controller 2 is connected to the computer system 1 through a connection port 21. Various types or standards can be applied to the connection port 21. In this embodiment, the connection port 21 includes a USB port. The signal transmission controller 2 has a signal processing unit 22 for processing and converting message delivered by the MSN communication platform 11 into a wireless signal, which is then transmitted by a wireless signal transceiving unit 23. The wireless signal transceiving unit 23 is also operative to receive a wireless signal and feeds it into the signal processing unit 22. The wireless signal is then converted into the format readable to the MSN communication platform 11 and transmitted to the other side of the network system 5 through the MSN communication platform 11. The signal transmission controller 2 includes a wireless network access point, for example.

The communication unit 3 includes a wireless phone allowing mobility of the calling party or the answering party within an acceptable range of the computer system 1. The communication unit 3 includes a household wireless or wired telephone, or the ear-phone type communication unit directly connected to the computer system 1.

The signal transceiver 4 electrically connected to the communication unit 3 includes a communication unit interface 41, a signal processing unit 42 and a wireless signal transceiving unit 43. The communication unit interface 4 wireless signal transceiving unit 43 receives a signal from or transmits a signal to the wireless signal transceiving unit 23 of the signal transceiver controller 2. The signal processing unit 42 has one end connected to the wireless signal transceiving unit 43 and the other end connected to the communication unit interface 41. The signal input from the wireless signal transceiving unit 43 or the communication interface 41 is processed and converted into formats readable to the communication unit 3 and the MSN communication platform 11, respectively. The processed signal is then transmitted to the communication unit 3 or the MSN communication platform 11. The signal processed by the processing unit 42 is transmitted to the communication unit 3 via the wireless unit interface 41.

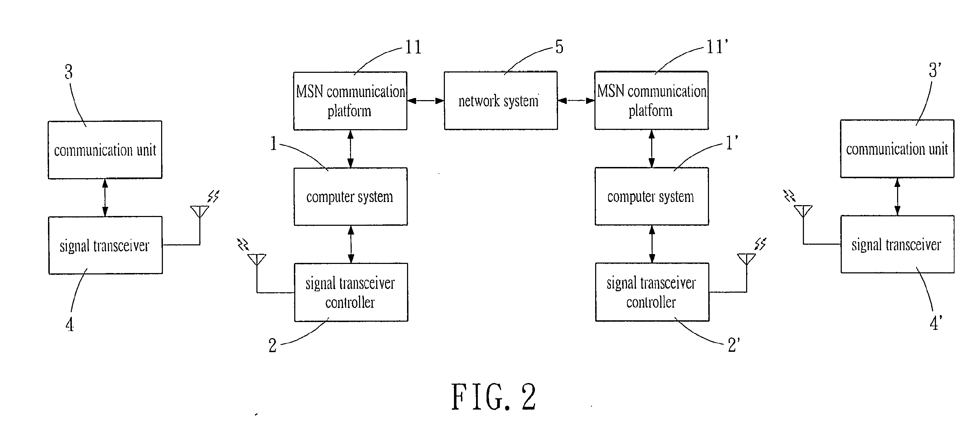

Referring to Figure 2, a block diagram for executing wireless telephone communication via a network system and MSN communication platform is illustrated. In this embodiment, wireless phones are used at both the receiving end (answering party) and the transmitting end (calling party). Through the network system 5 and the MSN communication platforms 11 and 11' at both ends, a real time message communication can be established. The transmitting end and the receiving end include the computer systems 1, 1', the signal transceiver controllers 2, 2', the communication units 3, 3' and the signal transceivers 4, 4', respectively, to establish the conversation.

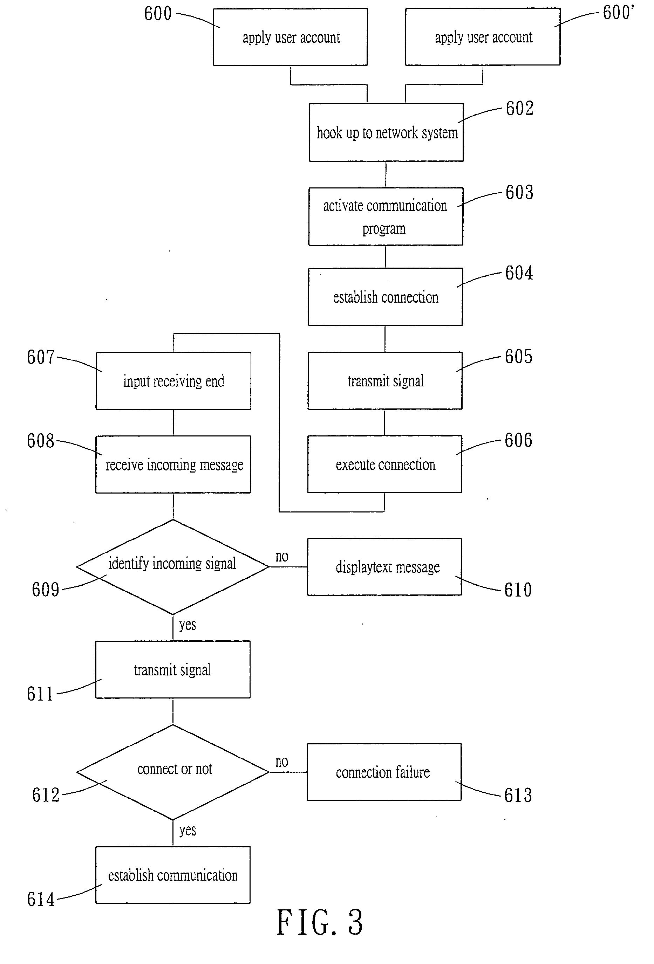

Referring to Figure 3, the method of establish telephone communication through the network is illustrated. To initiate the communication, each of the calling party and the answering party has to sign up the MSN communication platform 11 and apply a user account in step 600, 600'. When the computer system 1 of the calling party in step 602 is hooked up to the network system, the MSN real-time communication program can be activated and logged on in step 603. The answering party has to perform the same process to an on-line status. That is, the computer system 1' has to be connected to the network system 5, and the MSN communication platform 11' has to be activated and logged on. Thereby, connection between the MSN communication platforms 11, 11' of the transmitting and receiving ends is established. To initiate a conversation, the calling party activates the communication unit 3 to send a connection signal to the signal transceiver controller 2 of the computer system 1 through the signal transceiver 4, such that signal is transmitted between the communication unit 3 and the computer system 1 in step 605. The transmitting end can then dials a number, that is, inputs the MSN account of the receiving end in step 606 to execute the connection.

When the MSN account of the receiving end is input by the communication unit 3 and processed and transmitted to the computer system 1 via the signal transceiver 4, an incoming message is received by the MSN communication platform 11' at the receiving end via the network system in step 607. The incoming signal is then identified by the MSN communication platform 11'. When the MSN communication platform 11' identifies such incoming signal being a text message, such text message is displayed by the screen or monitor of the computer system 1' at the receiving end. When the incoming message is identified as a signal requesting conversation or demanding answering by phone, the incoming message is converted to a signal such as a ringing signal and transmitted to the communication unit 3' by wireless transmission. Various types of ringing sounds, vibrations or alerting effects can be generated by the communication unit 3' to identify the calling party. The user can then decide whether such call should be answered or not. The communication between the calling and answering parties can thus be established via the MSN communication platforms 11 and 11' in step 614. When the receiving end does not activate the connection or refuse to answer, the computer system 1 of the calling party will shows the message of failure of connection.

While the present invention has been particularly shown and described with reference to preferred embodiments thereof, it will be understood by those of ordinary skill in the art the various changes in form and details may be made therein without departing from the spirit and scope of the present invention as defined by the appended claims.

## Claims

1. A method for establishing telephone conversation through MSN platform between a calling end and a receiving end, comprising:
obtaining a user account for each of the calling end and the receiving end; logging on MSN platform at both the calling end and the receiving end; dialing at the calling end to establish communication with the receiving end
through the MSN platform;
generating an alert signal at the receiving end;
commencing communication when an answering signal is transmitted from the receiving end through the MSN platform; and
generating a failure signal when the no answering signal is received from the receiving end.

2. The method of Claim 1, further comprising a step of inputting the user account of the receiving end.

3. The method of Claim 1, wherein the step of dialing the calling end includes:
dialing up a communication unit to generate a wireless signal; and
transmitting the wireless signal to the MSN platform.

4. The method of Claim 4, wherein the communication unit includes a wireless telephone set or a wired telephone.

5. The method of Claim 3, further comprising converting the wireless into a format readable to the MSN platform.

6. The method of Claim 3, further comprising a step of generating an incoming signal to the MSN platform at the receiving end.

7. The method of Claim 6, further comprising a step of identifying the incoming signal.

8. The method of Claim 7, further comprising a step of display a text message carried by the incoming signal.

9. A MSN platform wireless network telephone system, comprising:
a communication unit having a wireless signal transceiving unit;
a computer system, having:
a MSN communication platform loaded therein; and
a transceiver controller installed at the computer system to transmit or receive wireless signal to or from the wireless hansceiving unit of the communication unit; and
a network system connected to the computer system.

10. The device of Claim 9, wherein the communication unit includes a wireless phone, a wired telephone or a cell phone.

11. The device of Claim 9, wherein the communication unit further comprising:
a signal processing unit connected to the wireless signal transceiving unit; and
a communication unit interface connected to the signal processing unit.

12. The device of Claim 9, wherein the transceiver controller is connected to the computer system via a connection port.

13. The device of Claim 12, wherein the connection port includes a USB port.

14. The device of Claim 9, wherein the transceiver controller comprises:
a wireless signal transceiving unit; and
a signal processing unit.

15. The device of Claim 9, wherein the transceiver controller includes a wireless access point.
